# EUROPEAN PATENT SPECIFICATION

(11) **EP 2 500 997 B1**
(45) Date of publication and mention of the grant of the patent: **24.01.2018**
(21) Application number: 12001111.9
(22) Date of filing: 20.02.2012
(51) Int. Cl.: H01R 43/24, H01R 13/405, H01R 13/504, B29C 45/16, B29C 45/14

(54) **Connector and method of producing it**
Verbinder und Verfahren zu dessen Herstellung
Connecteur et son procédé de production

(30) Priority: 15.03.2011 JP 2011056336
(43) Date of publication of application: 19.09.2012
(73) Proprietor: Sumitomo Wiring Systems, Ltd., Yokkaichi-city, Mie 510-8503 (JP)
(72) Inventor: Matsuoka, Hiroyuki, Yokkaichi-city Mie 510-8503 (JP); Tate, Takuya, Yokkaichi-city Mie 510-8503 (JP)
(74) Representative: Müller-Boré & Partner Patentanwälte PartG mbB

(56) References cited:
- JP-A- 2009 032 500
- US-A- 6 076 258
- US-A1- 2008 000 668
- US-A1- 2010 297 864

## Description

The present invention relates to a device connector and to a method of producing it.

A device connector to be connected to a device such as a motor installed in an electric vehicle or a hybrid vehicle is, for example, known from document JP 2009 32500 A. This device connector includes a plurality of metal busbars for connecting device-side terminals provided in the device and wire-side terminals provided on power feeding wires, and a molded resin portion covering these busbars.

Since insert molding is performed with the plurality of busbars bent into complicated shapes arranged side by side in the above device connector, a demolding structure for the molded resin portion becomes complicated and suitable boring cannot be performed on the molded resin portion. Thus, voids (small clearances) may be produced in a thick part of the molded resin portion, and cracks may be formed due to the voids in the molded resin portion and the waterproof property of the device connector may be reduced. Accordingly, it is being studied to suppress the formation of voids in the molded resin portion by forming a primary molded article by primary molding to cover parts of the respective busbars by a primary molded portion made of synthetic resin, setting the primary molded article in a secondary molding die and forming the molded resin portion by further covering the primary molded portion by a secondary molded portion.

The amount of shrinkage of the secondary molded portion covering the primary molded portion in a cooling process is a value obtained by multiplying the length of the secondary molded portion covering a straight part of the primary molded portion by a linear expansion coefficient of molding resin. Thus, if the straight part of the primary molded portion is made longer, the amount of shrinkage of the secondary molded portion covering this straight part also increases. Therefore, the primary molded portion may be squashed by the secondary molded portion when secondary molding resin is cooled and solidified.

US 2010/0297864 A1 discloses a device connector producing method including a primary molding step of forming a primary molded body formed with pilot holes, a terminal press-fitting step of press-fitting intermediate terminals into the pilot holes to form an intermediate product, and an insert molding step of setting the intermediate product in a secondary molding die and forming a device connector. The primary molded body includes a resin inflow opening that enables resin from a gate to flow through the primary molded body during secondary molding, and a supporting projection to contact an inner surface of the secondary molding die. The arrangement improves resin flow during secondary molding such that the intermediate product is prevented from being displaced.

US 2008/0000668 A1 discloses a resin molded article formed such that a primary molded article, collars and a metal flat plate are molded integrally as inserts in a secondary molded portion. A rib extends in a longitudinal direction along a surface of the primary molded article that is adjacent to a surface facing a gate, but not a terminal surface. Supports are provided intermittently along the longitudinal direction on a cavity inner surface of a molding die for supporting the rib. The primary molded article is reinforced by the rib, and is not likely to be deformed by resin injected from the gate and is not likely to be displaced.

US 6 076 258 A discloses method for insert molding comprising the steps of assembling inserts to two holders, the holders having a support for the insert, joining the two holders by a joint portion, setting the assembled inserts and holders inside a metal mold; and casting resin into the metal mold.

The present invention was completed in view of the above situation and an object thereof is to suppress the formation of voids and cracks in a molded resin portion.

This object is solved according to the invention by the features of the independent claims. Particular embodiments of the invention are subject of the dependent claims.

According to one aspect of the invention, there is provided a device connector in which a plurality of metal conductors connected to device-side terminals provided in a device are made integral by a molded resin portion, comprising a primary molded article integrally formed to a primary molded portion made of synthetic resin with the plurality of conductors arranged substantially side by side; a metal plate to be attached and fixed to the device; and a secondary molded portion made of synthetic resin and integrally forming the primary molded article and the metal plate; wherein the molded resin portion is composed of or comprises the primary molded portion and the secondary molded portion; and at least one resin entering space, into which molding resin for forming the secondary molded portion can enter, is arranged to cross a straight part of the primary molded portion extending in an arrangement direction of the conductors in the primary molded portion before the secondary molded portion is formed.

According to the thus constructed device connector, the formation of voids in the molded resin portion formed to be thick by one molding can be suppressed since the molded resin portion can be formed in separate steps for forming the primary molded portion and the secondary molded portion. Further, since the primary molded portion is formed with the resin entering space, a straight part of the primary molded portion can be divided by the resin entering space and the lengths of parts of the secondary molded portion individually covering the respective straight parts of the secondary molded portion can be shorter as compared with the case where no resin entering space is formed. This can reduce the amounts of shrinkage of the parts of the secondary molded portion individually covering the respective straight parts of the primary molded portion when secondary molding resin is cooled and solidified and suppress the squashing of the primary molded portion by the secondary molded portion.

The primary molded article is composed of or comprises a plurality of cores individually formed for the respective conductors; and the resin entering space is formed between a pair of adjacent cores.

According to this construction, the formation of voids in the primary molded portion can be further suppressed since the primary molded article is composed of the plurality of cores.

The present invention is preferably embodied to have the following constructions.

The resin entering space may be at least partly formed between a pair of adjacent conductors.

According to this construction, the resin entering space can be formed to be larger as compared with parts where the conductors are present, and the straight part of the primary molded portion arranged between adjacent resin entering spaces can be more effectively divided.

At least one contact portion may be provided at a back end portion of the resin entering space between the pair of adjacent cores; and/or the pair of adjacent cores may be in contact with each other via the contact portion in an injection direction in which the molding resin for forming the secondary molded portion is injected.

If the plurality of cores are set in contact without any clearances therebetween in a die for forming the secondary molded portion, the straight part of the primary molded portion becomes longer. Thus, it is thought to form the secondary molded portion while providing the resin entering space between the pair of adjacent cores by arranging the respective cores without holding them in contact. However, the respective cores are displaced by the influence of an injection pressure of the molding resin injected into a secondary molding die, and the secondary molded portion cannot be formed with the respective conductors positioned at proper positions. In this respect, according to the above construction, the pair of adjacent cores are in contact with each other via the contact portion in the injection direction of the molding resin. Thus, displacements of the respective cores in the injection direction of the molding resin can be suppressed while the straight part of the primary molded portion is divided. This can suppress the squashing of the primary molded portion by the secondary molded portion and suppress displacements of the respective conductors from the proper positions.

The contact portion may be composed of or may comprise a first linking portion provided on one of the pair of adjacent cores and a second linking portion provided on the other.

Parts of the first and second linking portions in contact with each other may be formed into a cranked shape by connecting first intersecting surfaces intersecting with the injection direction and second intersecting surfaces extending in the injection direction.

The first intersecting surfaces of the first and second linking portions may come into surface contact with each other and the second intersecting surfaces thereof may come into surface contact with each other when the molding resin for forming the secondary molded portion is injected into a secondary molding die.

According to this construction, even if a force for rotating the cores about the axis centers of the conductors acts due to the influence of the injection pressure of the molding resin, the first and second linking portions come into contact in two directions including the injection direction of the molding resin, thereby suppressing displacements of the cores resulting from the rotation of the respective cores or the like. This can further suppress displacements of the respective conductors from the proper positions.

According to another aspect of the invention, there is provided a production method for producing or molding a device connector, in particular according to the above aspect of the invention or a particular embodiment thereof, in which a plurality of metal conductors connected to device-side terminals provided in a device are made integral by a molded resin portion, comprising the following steps: integrally forming a primary molded article to a primary molded portion made of synthetic resin with the plurality of conductors arranged substantially side by side; and integrally forming a secondary molded portion made of synthetic resin the primary molded article and a metal plate to be attached and fixed to the device; wherein: the molded resin portion comprises the primary molded portion and the secondary molded portion; and at least one resin entering space, into which molding resin for forming the secondary molded portion can enter, is arranged to cross a straight part of the primary molded portion extending in an arrangement direction of the conductors in the primary molded portion before the secondary molded portion is formed.

The primary molded article comprises a plurality of cores individually formed for the respective conductors; and the resin entering space is formed between a pair of adjacent cores.

The present invention is preferably embodied as follows.

The resin entering space may be at least partly formed between a pair of adjacent conductors.

At least one contact portion may be provided at a back end portion of the resin entering space between the pair of adjacent cores; and/or the pair of adjacent cores may be in contact with each other via the contact portion in an injection direction in which the molding resin for forming the secondary molded portion is injected.

The contact portion may be formed to comprise a first linking portion provided on one of the pair of adjacent cores and a second linking portion provided on the other.

Parts of the first and second linking portions in contact with each other may be formed into a cranked shape by connecting first intersecting surfaces intersecting with the injection direction and second intersecting surfaces extending in the injection direction.

The first intersecting surfaces of the first and second linking portions may come into surface contact with each other and the second intersecting surfaces thereof come into surface contact with each other when the molding resin for forming the secondary molded portion is injected into a secondary molding die.

According to the above, it is possible to suppress the formation of voids and cracks in a molded resin portion.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a terminal block according to an embodiment,
FIG. 2 is a front view of the terminal block according to the embodiment,
FIG. 3 is a plan view of the terminal block according to the embodiment,
FIG. 4 is a perspective view showing a state where a shielding shell is mounted on the terminal block according to the embodiment,
FIG. 5 is a section along V-V of FIG. 2,
FIG. 6 is a section along VI-VI of FIG. 3,
FIG. 7 is a section along VII-VII of FIG. 2,
FIG. 8 is a perspective view showing a state where three cores are arranged in contact,
FIG. 9 is a plan view showing the state where the three cores are arranged in contact,
FIG. 10 is a plan view showing a state where the three cores are arranged while being spaced apart,
FIG. 11 is a side view of the left core,
FIG. 12 is a section showing a state where the cores are held by upper and lower dies and a slide die, and
FIG. 13 is a section showing a state where a secondary molded portion is formed in the upper and lower dies and the slide die.

### <Embodiment>

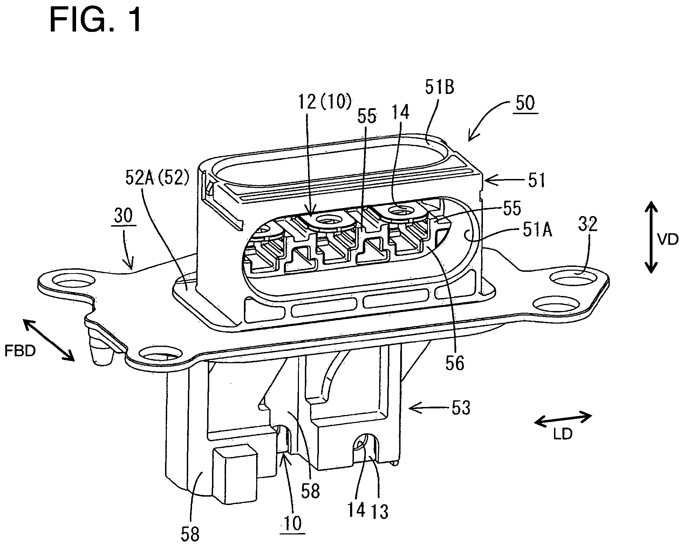

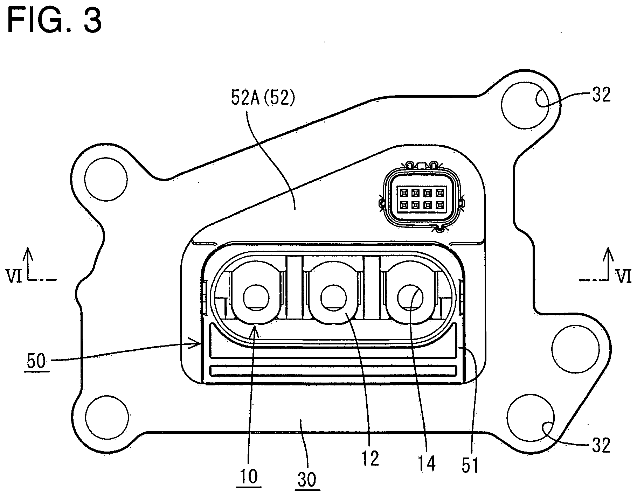

One particular embodiment of the present invention is described with reference to FIGS. 1 to 13.

In this embodiment, a terminal block to be attached to a metal motor case (not shown) housing a motor (as an example of a "device") inside is illustrated as an example of a device connector. As shown in FIG. 1, this terminal block includes a metal plate 30 to be attached and fixed to the motor case, a connector housing 50 molded to be integral to the metal plate 30, and one or more (e.g. three) conductive plates 10 held in the connector housing 50 while penetrating through the metal plate 30 in a plate thickness direction TD. Note that the connector housing 50 particularly corresponds to a molded resin portion and the one or more conductive plates 10 particularly correspond to conductors.

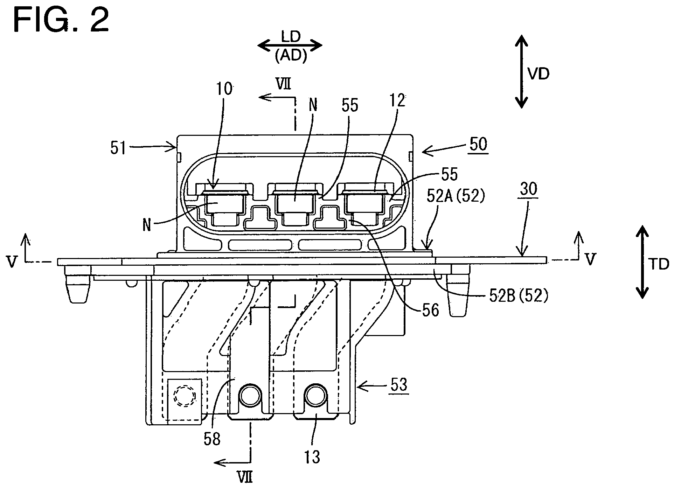

One or more one ends (first ends) of the conductive plates 10 are to be connected (particularly bolt-fastened) to one or more, particularly a plurality of unillustrated device-side busbars provided in or at the motor case for electrical connection. On the other hand, in a power supply device for supplying power such as an inverter, one or more, particularly a plurality of wires are arranged to substantially extend toward the motor case and an unillustrated wire-side connector is provided at end portions of these one or more wires. One or more wire-side terminals connected to respective wire ends are provided in this wire-side connector, and these one or more wire-side terminals are connected (particularly bolt-fastened) to the one or more other ends of the respective conductive plates 10 for electrical connection. Note that, in the following description, a vertical direction VD is a vertical direction in FIG. 2 and a lateral direction LD is a lateral direction in FIG. 2.

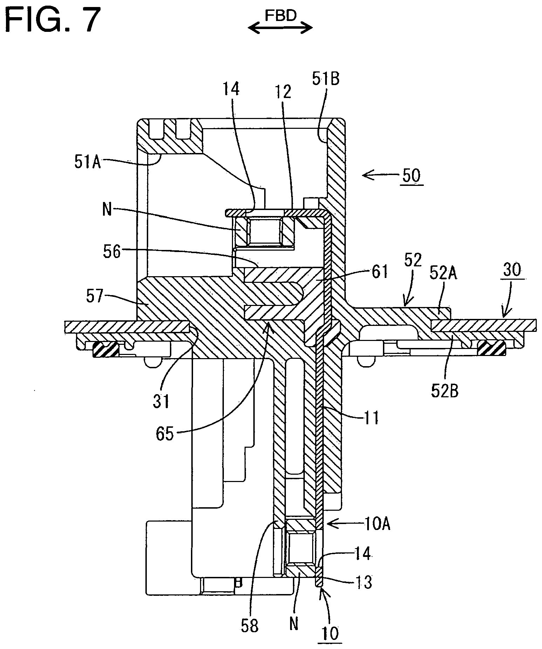

The (particularly each) conductive plate 10 is formed by, after a conductive (particularly metal) plate with good electrical conductivity is punched or cut into a specified (predetermined or predeterminable) shape particularly by a press, performing a specified (predetermined or predeterminable) bending process on the punched or cut conductive (metal) plate as shown in FIG. 7. The conductive plate 10 includes a terminal main portion 11 constituting or forming part of a main part of the conductive plate 10, a wire-side fastening portion 12 extending laterally or forward from the lateral or upper end of the terminal main portion 11, and a device-side fastening portion 13 provided at a lower end portion of the terminal main portion. The terminal main portion 11 particularly is formed to be longer than the wire-side fastening portion 12.

As shown in FIG. 2, the plurality of (e.g. three) conductive plates 10 particularly are arranged substantially side by side in the lateral direction LD. Further, the terminal main portions 11 particularly are slightly cranked in the lateral direction LD at intermediate positions. The wire-side fastening portions 12 and the device-side fastening portions 13 are each formed with a bolt insertion hole 14 through which an unillustrated fastening bolt at least partly is insertable.

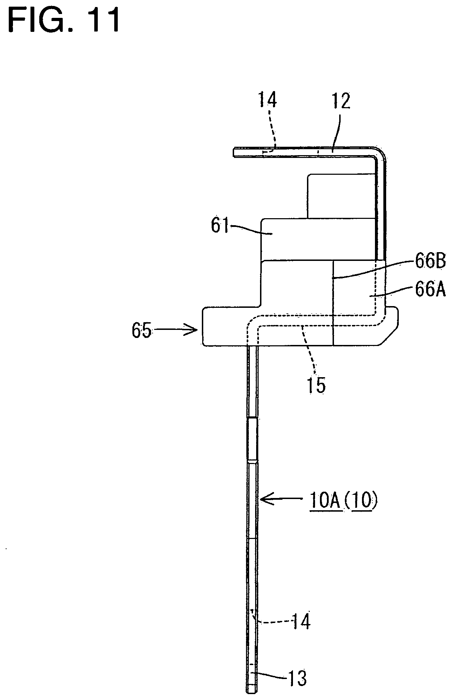

The terminal main portion 11 of the conductive plate 10A (particularly arranged in the center or intermediate position out of the three conductive plates 10) substantially extends in the vertical direction VD and/or is substantially flat as shown in FIG. 7. As shown in FIG. 11, the lateral terminal main portions 11, 11 (particularly of the both conductive plates 10B, 10B located at the opposite left and right sides out of the three conductive plates 10) include each a folded portion 15 bent forward to face the wire-side fastening portion 12 at an intermediate part (particularly at a substantially vertically central part) of the terminal main portion 11, and the front end of this folded portion 15 is bent downward particularly substantially at the same position as the front end of the wire-side fastening portion 12.

The metal plate 30 particularly is made of a metal flat plate material as a base material and includes an opening 31 formed to penetrate in a plate thickness direction TD of the plate material. The connector housing 50 includes a wire-side fitting portion 51 arranged to vertically penetrate through the opening 31, molded to be integral to the metal plate 30 and arranged above the metal plate 30, a (particularly substantially plate-like) flange 52 arranged at the height position of the metal plate 30 and bulging out sideways, and a device-side fitting portion 53 arranged below the metal plate 30.

As shown in FIG. 1, the wire-side fitting portion 51 particularly substantially is in the form of a box long in the lateral direction and includes a front end opening 51A (as a particular first opening) which is open in one direction (e.g. forward) and an upper end opening 51B (as a particular second opening) which is open in another direction (e.g. upward). The unillustrated wire-side connector at least partly is fittable or insertable into the wire-side fitting portion 51 through the front end opening 51A of the wire-side fitting portion 51.

As shown in FIG. 2, one or more (e.g. three) nut accommodating portions 55 are formed (particularly substantially side by side in the lateral direction LD) in the wire-side fitting portion 51. These one or more (e.g. three) nut accommodating portions 55 are respectively open to two sides such as forward and upward. Further, all the (three) nut accommodating portion(s) 55 is/are arranged to substantially face (particularly forward) through the front or first end opening 51A and substantially face (particularly upward) through the upper or second end opening 51B. One or more nuts N press-fitted through the front end opening 51A from front particularly are so accommodated in the nut accommodating portions 55 that the axis lines of the nuts N are aligned with the vertical direction VD.

The wire-side fastening portions 12 of the conductive plates 10 are arranged to close the upper end openings of the nut accommodating portions 55 as shown in FIGS. 1 and 2. Further, as shown in FIG. 7, each conductive plate 10 is arranged to penetrate through the opening 31 in the vertical direction VD and so held in the connector housing 50 that the wire-side fastening portion 12 is substantially arranged around the bolt insertion hole 14 and at least partly exposed forward and/or upward in the wire-side fitting portion 51 and, on the other hand, the device-side fastening portion 13 is substantially arranged around the bolt insertion hole 14 and at least partly exposed backward at the lower end portion of the device-side fitting portion 53. Each wire-side fastening portion 12 is at least partly exposed to the outside through the upper end opening 51B of the wire-side fitting portion 51. That is, the upper end opening 51B of the wire-side fitting portion 51 particularly is or may be used as a service hole used to at least partly insert a tool or the like for a bolt fastening operation. The wire-side terminal is substantially placed on the wire-side fastening portion 12 and the tool is inserted inside through the upper end opening 51B to threadably engage the fastening bolt with the nut N, whereby the conductive plate 10 and the wire-side terminal are electrically connected. Note that an unillustrated service cover is mounted on or to the upper end opening 51B of the wire-side fitting portion 51 after bolt fastening, thereby closing the upper end opening 51B.

An escaping recess 56 for allowing a leading end part of the fastening bolt penetrating through the nut N to escape when the fastening bolt is fastened to the nut N is provided below each nut accommodating portion 55. The escaping recess 56 particularly is formed to be narrower than the nut accommodating portion 55 in the lateral direction LD and integrally or unitarily formed with the nut accommodating portion 55 by a slide die 92 to be described later.

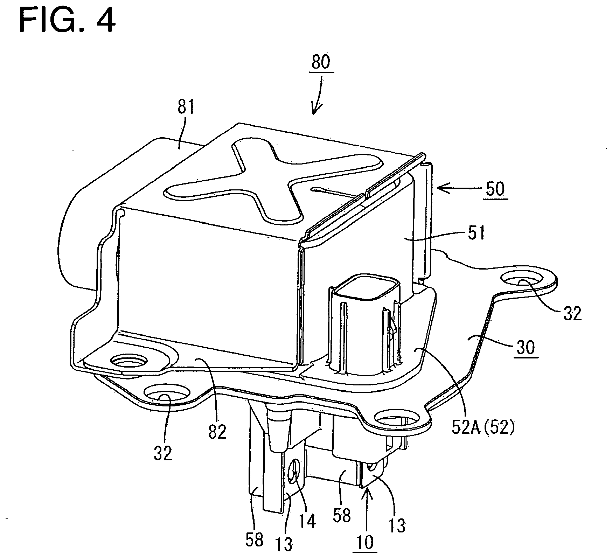

As shown in FIG. 4, a metal shielding shell 80 at least partly covering the wire-side fitting portion 51 except the rear surface is mounted on the wire-side fitting portion 51. This shielding shell 80 is formed by, after a conductive (particularly metal) plate with good electrical conductivity is punched or cut into a specified (predetermined or predeterminable) shape particularly by a press, performing a specified (predetermined or predeterminable) bending process on the punched or cut conductive (metal) plate. The shielding shell 80 includes a (particularly braided) fixing portion 81 having a laterally long cylindrical shape and adapted to crimp a braided wire, which is provided to collectively cover shielded conductive paths of the wire-side connector, against a crimp ring, and a fixing piece 82 for fixing the shielding shell 80 to the metal plate 30 and electrically connecting the shielding shell 80 and the metal plate 30.

Since the flange 52 particularly is formed to be integral to the metal plate 30 in a range not reaching an outer peripheral edge portion of the metal plate 30, the outer peripheral edge portion of the metal plate 30 particularly is exposed. Further, a wire-side flange 52A at a side of the wire-side fitting portion 51 is formed to extend in the lateral direction LD and backward direction, and a device-side flange 52B at a side of the device-side fitting portion 53 is formed to substantially cover a surface of the metal plate 30 at the side of the device-side fitting portion 53.

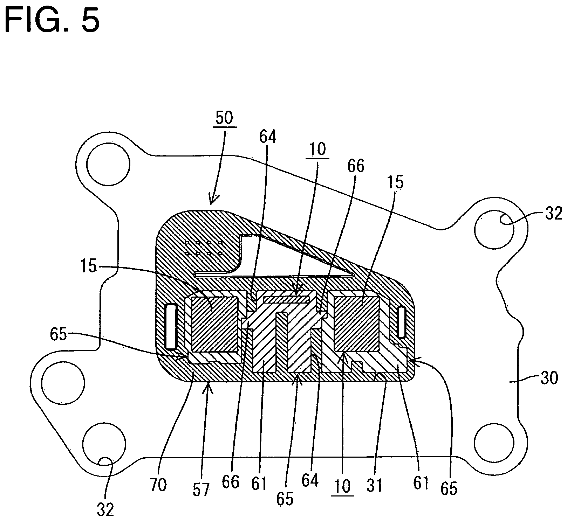

The opening 31 particularly has a substantially trapezoidal shape. Further, the folded portions 15 of the conductive plates 10 at the lateral (left and/or right) side(s) particularly out of the three conductive plates 10 are arranged in the opening 31. On the other hand, a thick portion 57 as a thick resin layer is formed particularly from a lower end portion of the wire-side fitting portion 51 to an upper end portion of the device-side fitting portion 53 as shown in FIGS. 5 to 7. That is, the one or more (e.g. three) conductive plates 10 having a complicated shape are arranged to penetrate through the opening 31 of the metal plate 30 in this thick portion 57.

Further, one or more, particularly a plurality of mounting holes 32 are formed in the outer peripheral edge portion of the metal plate 30. Unillustrated one or more fixing bolts or rivets are at least partly inserted through these mounting holes 32 and fastened to the motor case, whereby the terminal block can be attached and fixed to the motor case.

The device-side fitting portion 53 is housed into the motor case when the terminal block is fixed to the motor case. Further, as shown in FIG. 1, one or more (e.g. three) nut accommodating portions 58 are formed in the device-side fitting portion 53. Specifically, out of these nut accommodating portions 58, the nut accommodating portion 58 located in the center or at an intermediate position is arranged behind the other nut accommodating portions 58. In the nut accommodating portions 58 of the device-side fitting portion 53, the fastening bolts are threadably engaged with respective nuts N to electrically connect the conductive plates 10 and the device-side busbars similar to the nut accommodating portions 55 of the wire-side fitting portion 51. In this way, the wire-side terminals and the device-side busbars are electrically connected using the conductive plates 10 as intermediate terminals.

The connector housing 50 particularly is composed of a primary molded portion 61 made e.g. of synthetic resin and molded to be integral or unitary to the one or more (e.g. three) conductive plates 10 by primary molding and a secondary molded portion 70 made e.g. of synthetic resin and molded to be integral or unitary to the primary molded portion 61 by secondary molding, and particularly formed in two separate processes.

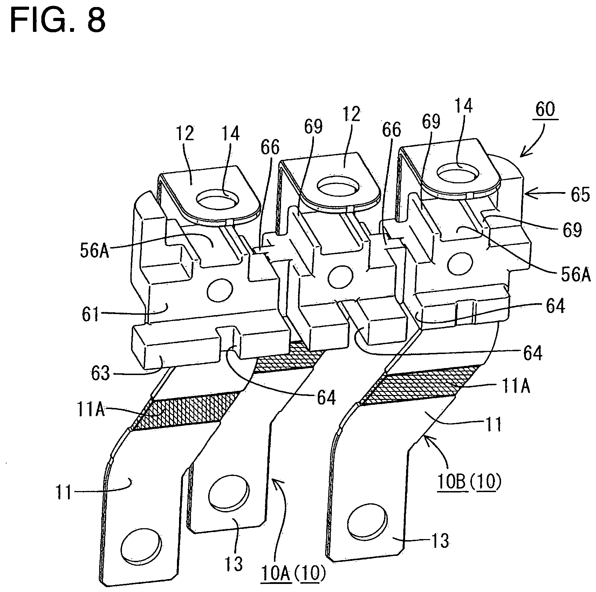

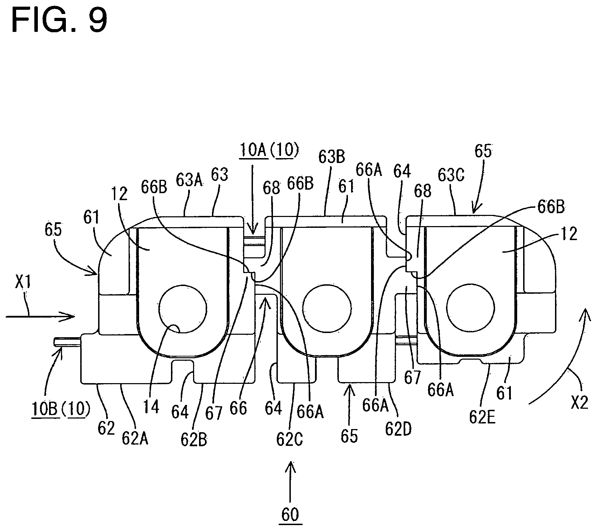

A primary molded article 60 formed by primary molding is composed of or comprises the one or more (e.g. three) conductive plates 10 and the primary molded portion 61 made of synthetic resin and covering parts of the terminal main portions 11 of the (three) conductive plate(s) 10. As shown in FIGS. 8 and 9, the (three) conductive plate(s) 10 is/are held in the primary molded portion 61 while particularly being arranged at equal intervals in the lateral direction.

As shown in FIG. 8, the primary molded portion 61 particularly is roughly in the form of a block having a substantially rectangular shape longer in the lateral direction LD when viewed from above, and at least partly covers substantially vertical central or intermediate parts of the terminal main portions 11 of the respective conductive plates 10 (particularly substantially over the entire circumference). The terminal main portion 11 of the conductive plate 10A located in the center or intermediate position is covered while vertically penetrating through a rear part of the primary molded portion 61, and the terminal main portions 11 of the conductive plate(s) 10B located at the lateral (left and/or right) side(s) is/are covered in the rear part of the primary molded portion 61 and the folding portion(s) 15 thereof is/are covered in a lower part of the primary molded portion 61 as shown in FIG. 11. In other words, as shown in FIGS. 1 and 11, the primary molded portion 61 particularly at least partly covers cranked parts of the terminal main portions 11 of the respective conductive plates 10, and these covered parts are subject to an injection pressure of molding resin injected from the lateral (e.g. left) side. Note that one or more sealing portions 11A where an adhesive is to be applied are provided below the parts of the terminal main portions 11 of the respective conductive plates 10 covered by the primary molded portion 61 and/or adhere to the secondary molded portion 70 to prevent the entrance of water or the like into the connector housing 50 when the secondary molded portion 70 is formed.

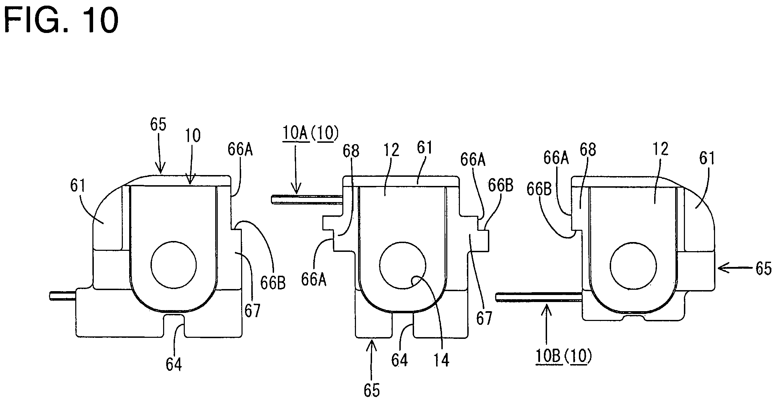

Further, one or more resin entering spaces 64 into which molding resin can at least partly enter when the secondary molded portion 70 is formed are formed to extend in forward and backward directions FBD (directions crossing an arrangement direction AD of the conductive plates 10) in a front end surface 62 and a rear end surface 63 of the primary molded portion 61 extending (particularly substantially straight) in the lateral direction LD as shown in FIGS. 9 and 10. These resin entering spaces 64 particularly have each a substantially rectangular plan view and/or are at least partly formed between the adjacent conductive plates 10 in the primary molded portion 61, in a part corresponding to the left conductive plate 10B in the primary molded portion 61 and/or in a part corresponding to the conductive plate 10A located in the center or intermediate position in the front end surface of the primary molded portion 61. Further, the resin entering spaces 64 provided between the adjacent conductive plates 10 particularly are formed to be longer in forward and backward directions FBD than the resin entering spaces 64 provided in correspondence with the conductive plates 10. The resin entering spaces 64 at least partly provided between the adjacent conductive plates 10 are so formed that intermediate or substantially central parts (contact portions 66) of the primary molded portion 61 in forward and backward directions FBD particularly are left at the back ends of the resin entering spaces 64. That is, a straight part of the front end surface 62 of the primary molded article 60 substantially extending in the lateral direction LD is divided by the resin entering spaces 64 as shown in FIG. 9, with the result that the front end surface 62 is composed of straight parts 62A, 62B, 62C, 62D and 62E substantially extending in the lateral direction LD one after another. Thus, the lengths of the respective straight parts 62A, 62B, 62C, 62D and 62E substantially extending in the lateral direction LD one after another are shorter than the length of the straight part continuously substantially extending in the lateral direction LD when the front end surface 62 of the primary molded article 60 is not divided by the resin entering spaces 64.

Similar to the front end surface 62, a substantially straight part of the rear end surface 63 of the primary molded article 60 substantially extending in the lateral direction LD particularly is also divided by the resin entering spaces 64, with the result that the rear end surface 63 is composed of substantially straight parts 63A, 63B and 63C substantially extending in the lateral direction LD one after another. The lengths of the respective straight parts 63A, 63B and 63C substantially extending in the lateral direction LD one after another particularly are shorter than the length of the substantially straight part continuously substantially extending in the lateral direction LD when the rear end surface 63 of the primary molded article 60 is not divided by the resin entering spaces 64.

Further, as shown in FIG. 9, two or more (e.g. three) cores 65, 65, 65 particularly are in contact in the lateral direction LD in the primary molded article 60.

The respective cores 65, 65, 65 can be divided at the resin entering spaces 64 provided between the adjacent conductive plates 10, 10, and the adjacent cores 65, 65 particularly are connected in the lateral direction LD by the contact portion 66 formed at the back ends of the resin entering spaces 64. In other words, the adjacent cores 65, 65 particularly are in contact in the lateral direction LD via the contact portion 66.

The contact portion 66 is composed of or comprises a first linking portion 67 substantially extending laterally (e.g. to the right) from the primary molded portion 61 of the core 65 located on the lateral (left) side and a second linking portion 68 substantially extending laterally (e.g. to the left) from the primary molded portion 61 of the core 65 located on the opposite lateral (right) side.

The respective linking portions 67, 68 particularly are at an angle different from 0° or 180°, preferably substantially perpendicular to an injection direction (lateral direction LD) and particularly include each two first surfaces (as an example of a first intersecting surface") 66A displaced in the lateral direction LD and a second surface (as an example of a "second intersecting surface") 66B located between the two first surfaces 66A, 66A and at an angle different from 0° or 180°, preferably substantially perpendicular to the first surfaces 66A, and the two first surfaces 66A, 66A and the second surface 66B particularly are connected in a cranked manner. The two first surfaces 66A, 66A of the linking portion 67 and the two first surfaces 66A, 66A of the linking portion 68 particularly are in surface contact in the injection direction, and/or the second surface 66B of the linking portion 67 and the second surface 66B of the linking portion 68 particularly are in surface contact in a direction at an angle different from 0° or 180°, preferably substantially perpendicular to the injection direction. That is, parts of the respective linking portions 67, 68 held in surface contact with each other form a cranked shape obtained by connecting the two surfaces 66A and the second surface 66B as shown in FIG. 9, and the adjacent cores 65, 65 particularly are held in surface contact with each other in forward and backward directions FBD and lateral direction LD.

One or more, particularly a pair of tightly holding portions 69, 69 (particularly substantially facing each other in the lateral direction LD and) standing upward are provided on the top of each core 65 as shown in FIG. 8. The (pairs of) tightly holding portion(s) 69 substantially extend(s) in forward and backward directions FBD, and tightly hold(s) the slide die 92 for forming the nut accommodating portions 55 and the escaping recesses 56 of the connector housing 50 (particularly from substantially opposite lateral sides) when secondary molding is performed. A bottom wall 56A connecting the lower ends of the tightly holding portions 69, 69 is provided adjacent to the tightly holding portion(s) 69, 69, particularly at least partly between the pair of tightly holding portions 69, 69. A length from the bottom walls 56A to the wire-side fastening portions 12 arranged above the nut accommodating portions 55 particularly is set to be substantially equal to a length which is the sum of the heights of the nut accommodating portions 55 and the escaping recesses 56 in the connector housing 50, and/or the wire-side fastening portions 12 and the bottom walls 56A tightly hold the slide die 92 from upper and lower sides when secondary molding is performed.

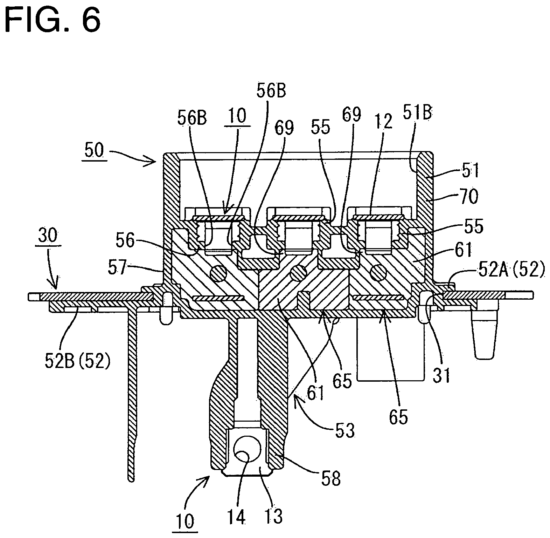

The secondary molded portion 70 formed by secondary molding is such that the primary molded portion 61 of the primary molded article 60 penetrates through the opening 31 of the metal plate 30 in forward and backward directions FBD as shown in FIGS. 5 and 6, and/or constitutes or forms part of the above connector housing 50 together with the primary molded portion 61. At the time of secondary molding, molten molding resin to be molded into the secondary molded portion 70 at least partly enters the resin entering spaces 64 of the primary molded article 60 and substantially flows to the both upper and lower surfaces of the metal plate 30, whereby the primary molded article 60 and the metal plate 30 are integrally formed. That is, the formation of voids in the thick portion 57 of the connector housing 50 is suppressed or reduced by arranging the primary molded portion 61 of the primary molded article 60 in the thick portion 57 of the connector housing 50 and forming the thick portion 57, which is thickest in the connector housing 50, in the primary molded portion 61 and the secondary molded portion 70. This can prevent crack formation in the thick portion 57 due to voids and a reduction in the waterproof property of the terminal block. Further, since the primary molded article 60 particularly is formed as three separate parts for the respective conductive plates 10, the formation of voids in the primary molded portion 61 can be further suppressed.

The terminal block of this embodiment is structured as described above. Next, a production method of the secondary molded portion 70 and functions and effects thereof are described.

First, the respective cores 65, 65, 65 are set one next to another in the lateral direction LD in a lower die 91 of first and second (upper and lower) dies 90, 91, which are opened (particularly substantially in the vertical direction VD) for secondary molding, while being held in surface contact at the respective contact portions 66. At this time, since the adjacent cores 65, 65 can be set in the lower die 91 only by bringing the respective cranked linking portions 67, 68 into surface contact in forward and backward directions FBD and lateral direction LD, a process of setting the cores 65 in the lower die 91 can be simplified as compared with the case where the linking portions are engaged with each other such as by mating engagement. Further, as compared with the case where the respective linking portions 67, 68 are formed as projections and recesses, a die for forming the primary molded portion 61 can be simplified and production cost of the die for primary molding can be reduced.

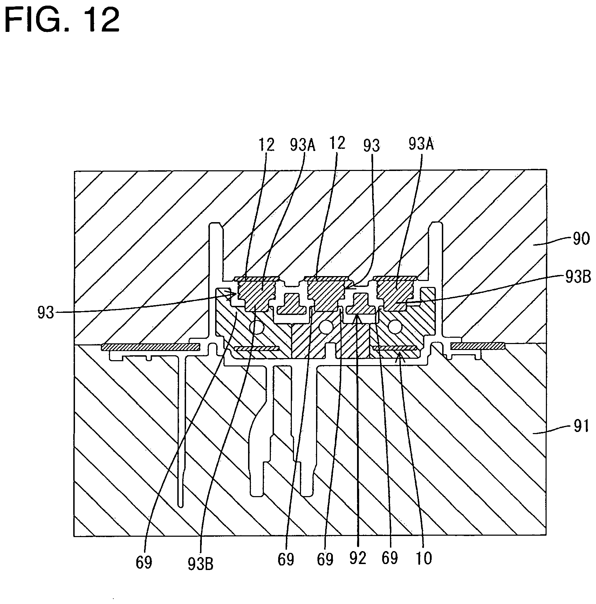

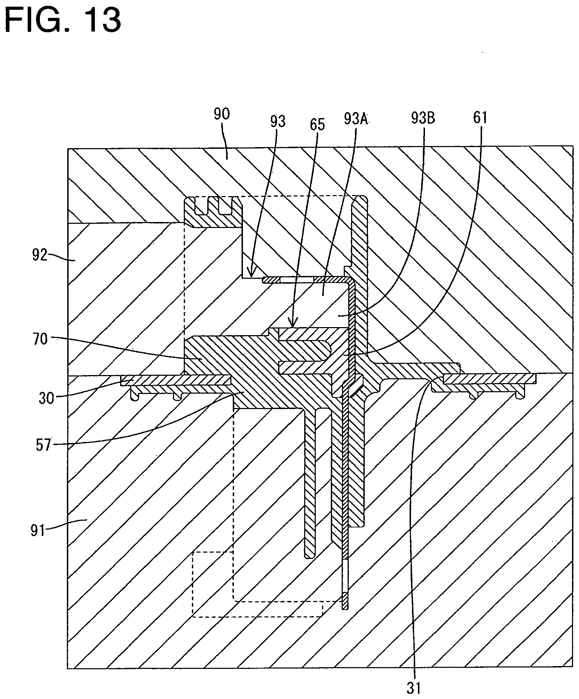

When all the cores 65 are set in the lower die 91, the slide die 92 is inserted from front into spaces substantially enclosed by the pairs of tightly holding portions 69, 69 of the respective cores 65, 65, 65, the wire-side fastening portions 12 and the bottom walls 56A and the die is so clamped that the upper and lower dies 90, 91 particularly sandwich all the cores 65 from the upper and lower sides as shown in FIG. 13. At this time, the slide die 92 is so assembled as to be tightly held from the lateral (left and right) sides by the one or more, particularly the pairs of tightly holding portions 69, 69 and/or from the upper and lower sides by the wire-side fastening portions 12 and the bottom walls 56A. Specifically, as shown in FIGS. 12 and 13, the slide die 92 includes one or more (e.g. three) molding pins 93 each composed of or comprising a nut accommodating portion forming portion 93A and an escaping recess forming portion 93B narrower than the nut accommodating portion forming portion 93A in the lateral direction LD and the escaping recess forming portions 93B particularly are tightly held from the lateral (left and/or right) sides by the pairs of the tightly holding portions 69, 69 of the primary molded portion 61.

Subsequently, the secondary molded portion 70 is formed by injecting molten molding resin, for example, from the back side to the front side of the plane of FIG. 13 from an unillustrated gate provided at a lateral side of the upper and lower dies 90, 91, thereby forming the connector housing 50 as shown in FIG. 13. At this time, the molding resin particularly is received by the left surface of the primary molded portion 61 in the respective cores 65, 65, 65, and the respective cores 65, 65, 65 try to move in an injection direction X1 of the molding resin and in a counterclockwise rotational direction X2 about the centers of the axis lines of the conductive plates 10 as shown in FIG. 9. However, since the respective cores 65, 65, 65 particularly are connected in surface contact with each other by the contact portions 66 (first surfaces 66A) according to this embodiment, all the cores 65 become integral, thereby resisting the injection pressure of the molding resin and suppressing displacements of the respective cores 65, 65, 65 in the injection direction. Further, also against a rotational force in a clockwise direction opposite to the direction X2, the contact portions 66 (second surfaces 66B) particularly come into surface contact in forward and backward directions FBD, thereby being able to restrict clockwise rotational forces about the axis centers of the conductive plates 10 and suppress displacements of the respective cores 65, 65, 65.

Further, since the respective cores 65, 65, 65 particularly tightly hold the slide die 92 in vertical and lateral directions using the pairs of tightly holding portions 69, 69, the wire-side fastening portions 12 and the bottom walls 56A, displacements of the respective cores 65, 65, 65 in the injection direction particularly can be further suppressed and vertical displacements thereof can also be suppressed. This can suppress displacements of the respective conductive plates 10 resulting from displacements of the respective cores 65, 65, 65. Note that the pairs of the tightly holding portions 69, 69 of the respective cores 65, 65, 65 in the primary molded portion 61 form pairs of inner walls 56B, 56B facing each other in the escaping recesses 56 of the connector housing 50 together with the secondary molded portion 70 as shown in FIG. 6.

The secondary molded portion 70 formed as described above is cured by being cooled, and forms the connector housing 50 together with the primary molded portion 61. In this cooling process, the secondary molded portion 70 is cured and shrinks to squash the part of the primary molded portion 61 covered thereby. However, in this embodiment, the straight parts of the front and rear end surfaces 62, 63 of the primary molded portion 61 particularly are divided by the resin entering spaces 64, and the lengths of the parts of the secondary molded portion 70 individually covering the respective straight parts 62A, 62B, 62C, 62D, 62E, 63A, 63B and 63C of the respective cores 65 are short. Thus, as compared with the case where the primary molded portion is formed with no resin entering spaces 64, the amount of shrinkage of the secondary molded portion 70 individually covering the respective straight parts 62A, 62B, 62C, 62D, 62E, 63A, 63B and 63C of the respective cores 65, 65, 65 particularly can be made smaller. In this way, the squashing of the primary molded portion 61 by the secondary molded portion 70 can be suppressed. Further, since the resin entering spaces 64 substantially extending in forward and backward directions FBD particularly are formed to be larger between the adjacent cores 65, 65 than in the other parts, it is possible to further effectively divide the primary molded portion 61 and further suppress the influence of cure shrinkage in the secondary molded portion 70.

Further, since the escaping recess forming portions 93B of the slide die 92 particularly are tightly held by the pairs of tightly holding portions 69, 69 upon forming the secondary molded portion 70 in this embodiment, the width of the primary molded portion 61 in the lateral direction LD can be shortened and the thickening of the primary molded portion 61 in the lateral direction LD can be suppressed as compared with the case where pairs of tightly holding portions for tightly holding the nut accommodating portion forming portions 93A for forming the nut accommodating portions 55 are provided. This can further suppress the formation of voids in the primary molded portion 61.

Accordingly, to suppress the formation of voids and cracks in a molded resin portion, a terminal block in which a plurality of metal conductive plates 10 to be connected to device-side busbars provided in a motor (as a particular device) are made integral by a connector housing 50 includes a primary molded article 60 integrally formed to a primary molded portion 61 made of synthetic resin with a plurality of conductive plates 10 substantially arranged side by side in a lateral direction; a metal plate to be attached and fixed to a motor case; and a secondary molded portion 70 integrally forming the primary molded article 60 and the metal plate 30. Resin entering spaces, into which molding resin for forming the secondary molded portion 70 can enter, are arranged to cross straight parts of the primary molded portion 61 extending in the lateral direction in the primary molded portion 61 before the secondary molded portion 70 is formed.

### <Other Embodiments>

The present invention is not limited to the above described and illustrated embodiment. For example, the following embodiments are also included in the technical scope of the present invention.
(1) Although the primary molded article 60 is divided into the three cores 65 in the above embodiment, the present invention is not limited to such a mode. For example, the primary molded article 60 may not be divided.
(2) Although the terminal block includes the shielding shell 80 in the above embodiment, the present invention is not limited to such a mode. For example, the present invention may be applied to a terminal block which requires no shielding shell.
(3) Although the connector housing 50 is formed with the primary molded portion 61 penetrating through the opening 31 of the metal plate 30 in the above embodiment, the present invention is not limited to such a mode. For example, the primary molded portion 61 may not penetrate through the opening 31 of the metal plate 30.

### LIST OF REFERENCE NUMERALS

- 10:: conductive plate (conductor)
- 30:: metal plate
- 50:: connector housing (molded resin portion)
- 60:: primary molded article
- 61:: primary molded portion
- 64:: resin entering space
- 65:: core
- 66:: contact portion
- 66A:: first surface (first intersecting surface)
- 66B:: second surface (second intersecting surface)
- 67:: first linking portion
- 68:: second linking portion
- 70:: secondary molded portion

## Claims

1. A device connector in which a plurality of metal conductors (10) connected to device-side terminals provided in a device are made integral by a molded housing (50), comprising:
a primary molded article (60) comprising a plurality of cores (65) made of synthetic resin, the cores (65) being individually formed and positioned in contact in a lateral direction (LD), each core (65) being made integral with a conductor (10) by molding; and
a metal plate (30) to be attached and fixed to the device;
wherein:
the housing (50) comprises a secondary molded portion (70) made of synthetic resin and integrally forming the primary molded article (60) and the metal plate (30);
at least one resin entering space (64), into which molding resin for forming the secondary molded portion (70) of the housing (50) can enter, is arranged to cross a straight part of the primary molded article (60) extending in the lateral direction (LD) before the secondary molded portion (70) of the housing (50) is formed; and
the resin entering space (64) is formed between a pair of adjacent cores (65).

2. A device connector according to claim 1, wherein the resin entering space (64) is at least partly formed between a pair of adjacent conductors (10).

3. A device connector according to claim 1 or 2, wherein:
at least one contact portion (66) is provided at a back end portion of the resin entering space (64) between the pair of adjacent cores (65); and/or
the pair of adjacent cores (65) are in contact with each other via the contact portion (66) in an injection direction in which the molding resin for forming the secondary molded portion (70) is injected.

4. A device connector according to claim 3, wherein the contact portion (66) comprises a first linking portion (67) provided on one of the pair of adjacent cores (65) and a second linking portion (68) provided on the other.

5. A device connector according to claim 4, wherein parts of the first and second linking portions (67, 68) in contact with each other are formed into a cranked shape by connecting first intersecting surfaces (66A) intersecting with the injection direction and second intersecting surfaces (66B) extending in the injection direction.

6. A device connector according to claim 5, wherein the first intersecting surfaces (66A) of the first and second linking portions (67, 68) come into surface contact with each other and the second intersecting surfaces (66B) thereof come into surface contact with each other when the molding resin for forming the secondary molded portion (70) is injected into a secondary molding die.

7. A production method for producing a device connector in which a plurality of metal conductors (10) connected to device-side terminals provided in a device are made integral by a molded housing (50), comprising the following steps:
integrally forming a primary molded article (60) comprising a plurality of cores (65) made of synthetic resin, the cores (65) being individually formed and positioned in contact in a lateral direction (LD), each core (65) being made integral with a conductor (10) by molding; and
integrally forming the housing (50) comprising a secondary molded portion (70) made of synthetic resin with the primary molded article (60) and a metal plate (30) to be attached and fixed to the device;
wherein:
at least one resin entering space (64), into which molding resin for forming the secondary molded portion (70) of the housing (50) can enter, is arranged to cross a straight part of the primary molded article (60) extending in the lateral direction (LD) of the conductors (10) before the secondary molded portion (70) of the housing (50) is formed; and
the resin entering space (64) is formed between a pair of adjacent cores (65).

8. A method according to claim 7, wherein the resin entering space (64) is at least partly formed between a pair of adjacent conductors (10).

9. A method according to claim 7 or 8, wherein:
at least one contact portion (66) is provided at a back end portion of the resin entering space (64) between the pair of adjacent cores (65); and/or
the pair of adjacent cores (65) are in contact with each other via the contact portion (66) in an injection direction in which the molding resin for forming the secondary molded portion (70) is injected.

10. A method according to claim 9, wherein the contact portion (66) is formed to comprise a first linking portion (67) provided on one of the pair of adjacent cores (65) and a second linking portion (68) provided on the other.

11. A method according to claim 10, wherein parts of the first and second linking portions (67, 68) in contact with each other are formed into a cranked shape by connecting first intersecting surfaces (66A) intersecting with the injection direction and second intersecting surfaces (66B) extending in the injection direction.

12. A method according to claim 11, wherein the first intersecting surfaces (66A) of the first and second linking portions (67, 68) come into surface contact with each other and the second intersecting surfaces (66B) thereof come into surface contact with each other when the molding resin for forming the secondary molded portion (70) is injected into a secondary molding die.

## Patentansprüche

1. Ein Geräteverbinder, bei dem eine Vielzahl an Metallleitern (10), die mit geräteseitigen, in einem Gerät bereitgestellten Anschlüssen verbunden sind, durch ein gegossenes Gehäuse (50) einstückig gemacht werden, der Folgendes umfasst:
ein primärer gegossener Artikel (60), der eine Vielzahl an Kernen (65) umfasst, die aus Kunstharz bestehen, wobei die Kerne (65) einzeln geformt und in einer seitlichen Richtung (LD) in Kontakt positioniert werden, wobei jeder Kern (65) mit einem Leiter (10) durch Guss einstückig gemacht wird ; und
eine Metallplatte (30), die am Gerät anzusetzen und zu befestigen ist;
wobei:
das Gehäuse (50) einen sekundären, aus Kunstharz bestehenden gegossenen Abschnitt (70) umfasst, und einstückig ausbilden des primären gegossenen Artikels (60) und der Metallplatte (30);
mindestens ein Harzeintrittsraum (64), in den Gießharz zur Bildung des sekundären gegossenen Abschnitts (70) des Gehäuses (50) eintreten kann, angeordnet ist, um einen geraden Teil des primären gegossenen Artikels (60) zu durchkreuzen, indem er in seitlicher Richtung (LD) verläuft, bevor der sekundäre gegossene Abschnitt (70) des Gehäuses (50) gebildet wird; und wobei
der Harzeintrittsraum (64) zwischen einem Paar von benachbarten Kernen (65) gebildet wird.

2. Ein Geräteverbinder nach Anspruch 1, wobei der Harzeintrittsraum (64) zumindest teilweise zwischen einem Paar von benachbarten Leitern (10) gebildet wird.

3. Ein Geräteverbinder nach Anspruch 1 oder 2, wobei:
mindestens ein Kontaktabschnitt (66) in einem hinteren Endabschnitt des Harzeintrittsraums (64) zwischen einem Paar von benachbarten Kernen (65) bereitgestellt wird; und/oder wobei
das Paar von benachbarten Kernen (65) durch den Kontaktabschnitt (66) miteinander in Kontakt sind, in einer Einspritzrichtung, in der das Gießharz zur Bildung des sekundären gegossenen Abschnitts (70) eingespritzt wird.

4. Ein Geräteverbinder nach Anspruch 3, wobei der Kontaktabschnitt (66) einen ersten Verbindungsabschnitt (67) umfasst, der an einem Kern aus dem Paar von benachbarten Kernen (65) bereitgestellt wird, und einen zweiten Verbindungsabschnitt (68), der an dem anderen Kern bereitgestellt wird.

5. Ein Geräteverbinder nach Anspruch 4, wobei miteinander in Kontakt stehende Teile der Verbindungsabschnitte eins und zwei (67, 68) in gekröpfter Form gebildet werden, indem erste sich schneidende Flächen (66A), die sich mit der Einspritzrichtung schneiden, und zweite sich schneidende Flächen (66B), die in Einspritzrichtung verlaufen, verbunden werden.

6. Ein Geräteverbinder nach Anspruch 5, wobei die ersten sich schneidenden Flächen (66A) der Verbindungsabschnitte eins und zwei (67, 68) miteinander in Oberflächenkontakt geraten, und wobei deren zweite sich schneidende Flächen (66B) miteinander in Oberflächenkontakt geraten, wenn das Gießharz zur Bildung des sekundären gegossenen Abschnitts (70) in eine sekundäre Gießform eingespritzt wird.

7. Ein Herstellungsverfahren zur Herstellung eines Geräteverbinders, bei dem eine Vielzahl an Metallleitern (10), die mit geräteseitigen, in einem Gerät bereitgestellten Anschlüssen verbunden sind, durch ein gegossenes Gehäuse (50) einstückig gemacht werden, das die folgenden Schritte umfasst:
integral ausbilden eines primären gegossenen Artikels (60), der eine Vielzahl an Kernen (65) umfasst, die aus Kunstharz bestehen, wobei die Kerne (65) einzeln geformt und in Kontakt in einer seitlichen Richtung (LD) positioniert werden, wobei jeder Kern (65) mit einem Leiter (10) durch Guss einstückig gemacht wird ; und
integral ausbilden des Gehäuses (50), das einen sekundären gegossenen Abschnitt (70) umfasst, der aus Kunstharz besteht, mit dem primären gegossenen Artikel (60) und einer am Gerät anzusetzenden und zu befestigenden Metallplatte (30);
wobei:
mindestens ein Harzeintrittsraum (64), in den Gießharz zur Bildung des sekundären gegossenen Abschnitts (70) des Gehäuses (50) eintreten kann, angeordnet ist, um einen geraden Teil des primären gegossenen Artikels (60), der in seitlicher Richtung (LD) der Leiter (10) verläuft, zu überqueren, bevor der sekundäre gegossene Abschnitt (70) des Gehäuses (50) gebildet wird; und wobei
der Harzeintrittsraum (64) zwischen einem Paar von benachbarten Kernen (65) gebildet wird.

8. Ein Verfahren nach Anspruch 7, wobei der Harzeintrittsraum (64), zumindest teilweise, zwischen einem Paar von benachbarten Leitern (10) gebildet wird.

9. Ein Verfahren nach Anspruch 7 oder 8, wobei:
mindestens ein Kontaktabschnitt (66) an einem hinteren Endabschnitt des Harzeintrittsraums (64), zwischen dem Paar von benachbarten Kernen (65), bereitgestellt wird; und/oder wobei
das Paar von benachbarten Kernen (65) über den Kontaktabschnitt (66) miteinander in Kontakt stehen, in einer Einspritzrichtung, in der das Gießharz zur Bildung des sekundären gegossenen Abschnitts (70) eingespritzt wird.

10. Ein Verfahren nach Anspruch 9, wobei der Kontaktabschnitt (66) gebildet wird, um einen ersten Verbindungsabschnitt (67) zu umfassen, der an einem Kern aus dem Paar von benachbarten Kernen (65) bereitgestellt wird, und einen zweiten Verbindungsabschnitt (68) zu umfassen, der an dem anderen Kern bereitgestellt wird.

11. Ein Verfahren nach Anspruch 10, wobei miteinander in Kontakt stehende Teile der Verbindungsabschnitte eins und zwei (67, 68) in gekröpfter Form gebildet werden, indem erste sich schneidende Flächen (66A), die sich mit der Einspritzrichtung schneiden, und zweite sich schneidende Flächen (66B), die in Einspritzrichtung verlaufen, verbunden werden.

12. Ein Verfahren nach Anspruch 11, wobei die ersten sich schneidenden Flächen (66A) der Verbindungsabschnitte eins und zwei (67, 68) miteinander in Oberflächenkontakt geraten, und wobei deren zweite sich schneidende Flächen (66B) miteinander in Oberflächenkontakt geraten, wenn das Gießharz zur Bildung des sekundären gegossenen Abschnitts (70) in eine sekundäre Gießform eingespritzt wird.

## Revendications

1. Un connecteur de dispositif, dans lequel une pluralité de conducteurs métalliques (10) connectés à des bornes côté dispositif fournies dans un dispositif sont rendus solidaires par un boîtier (50) moulé, comprenant :
un article moulé primaire (60) comprenant une pluralité de noyaux (65) constitués de résine synthétique, les noyaux (65) étant formés individuellement et positionnés en contact dans une direction latérale (LD), chaque noyau (65) étant rendu solidaire avec un conducteur (10) par moulage ; et
une plaque métallique (30) qui est à attacher et à fixer au dispositif ;
sachant que :
le boîtier (50) comprend une portion moulée secondaire (70) constituée de résine synthétique, et former intégralement l'article moulé primaire (60) et la plaque métallique (30) ;
au moins un espace d'entrée de résine (64), dans lequel de la résine de moulage peut entrer pour former la portion moulée secondaire (70) du boîtier (50), est agencé de manière à traverser une partie droite de l'article moulé primaire (60) en s'étendant dans la direction latérale (LD) avant que la portion moulée secondaire (70) du boîtier (50) soit formée ; et que
l'espace d'entrée de résine (64) est formé entre une paire de noyaux (65) adjacents.

2. Un connecteur de dispositif d'après la revendication 1, sachant que l'espace d'entrée de résine (64) est formé au moins partiellement entre une paire de conducteurs (10) adjacents.

3. Un connecteur de dispositif d'après la revendication 1 ou 2, sachant que :
au moins une portion de contact (66) est fournie dans une partie terminale postérieure de l'espace d'entrée de résine (64) entre la paire de noyaux (65) adjacents ; et/ou que
la paire de noyaux (65) adjacents sont en contact l'un avec l'autre via la portion de contact (66) dans une direction d'injection, dans laquelle est injectée la résine de moulage pour former la portion moulée secondaire (70).

4. Un connecteur de dispositif d'après la revendication 3, sachant que la portion de contact (66) comprend une première portion de liaison (67), fournie sur un parmi la paire de noyaux (65) adjacents, et une deuxième portion de liaison (68) fournie sur l'autre.

5. Un connecteur de dispositif d'après la revendication 4, sachant que des parties des portions de liaison un et deux (67, 68), qui sont en contact l'une avec l'autre, sont formées en une forme coudée en raccordant des premières surfaces d'intersection (66A) coupant la direction d'injection et des deuxièmes surfaces d'intersection (66B) s'étendant dans la direction d'injection.

6. Un connecteur de dispositif d'après la revendication 5, sachant que les premières surfaces d'intersection (66A) des portions de liaison un et deux (67, 68) entrent en contact de surface l'une avec l'autre et que les deuxièmes surfaces d'intersection (66B) de celles-ci entrent en contact de surface l'une avec l'autre quand la résine de moulage pour former la portion moulée secondaire (70) est injectée dans une matrice de moulage secondaire.

7. Un procédé de production pour produire un connecteur de dispositif, dans lequel une pluralité de conducteurs métalliques (10) connectés à des bornes côté dispositif fournies dans un dispositif sont rendus solidaires par un boîtier (50) moulé, comprenant les étapes suivantes consistant à :
former intégralement un article moulé primaire (60) comprenant une pluralité de noyaux (65) constitués de résine synthétique, les noyaux (65) étant formés individuellement et positionnés en contact dans une direction latérale (LD), chaque noyau (65) étant rendu solidaire avec un conducteur (10) par moulage ; et
former intégralement le boîtier (50) comprenant une portion moulée secondaire (70) constituée de résine synthétique avec l'article moulé primaire (60) et une plaque métallique (30) pour être attaché et fixé au dispositif ;
sachant que :
au moins un espace d'entrée de résine (64), dans lequel de la résine de moulage peut entrer pour former la portion moulée secondaire (70) du boîtier (50), est agencé de manière à traverser une partie droite de l'article moulé primaire (60) en s'étendant dans la direction latérale (LD) des conducteurs (10) avant que la portion moulée secondaire (70) du boîtier (50) soit formée ; et que
l'espace d'entrée de résine (64) est formé entre une paire de noyaux (65) adjacents.

8. Un procédé d'après la revendication 7, sachant que l'espace d'entrée de résine (64) est formé au moins partiellement entre une paire de conducteurs (10) adjacents.

9. Un procédé d'après la revendication 7 ou 8, sachant que :
au moins une portion de contact (66) est fournie dans une partie terminale postérieure de l'espace d'entrée de résine (64) entre la paire de noyaux (65) adjacents ; et/ou que
la paire de noyaux (65) adjacents sont en contact l'un avec l'autre via la portion de contact (66) dans une direction d'injection, dans laquelle est injectée la résine de moulage pour former la portion moulée secondaire (70).

10. Un procédé d'après la revendication 9, sachant que la portion de contact (66) est formée pour comprendre une première portion de liaison (67), fournie sur un parmi la paire de noyaux (65) adjacents, et une deuxième portion de liaison (68) fournie sur l'autre.

11. Un procédé d'après la revendication 10, sachant que des parties des portions de liaison un et deux (67, 68), qui sont en contact l'une avec l'autre, sont formées en une forme coudée en raccordant des premières surfaces d'intersection (66A) coupant la direction d'injection et des deuxièmes surfaces d'intersection (66B) s'étendant dans la direction d'injection.

12. Un procédé d'après la revendication 11, sachant que les premières surfaces d'intersection (66A) des portions de liaison un et deux (67, 68) entrent en contact de surface l'une avec l'autre et que les deuxièmes surfaces d'intersection (66B) de celles-ci entrent en contact de surface l'une avec l'autre quand la résine de moulage pour former la portion moulée secondaire (70) est injectée dans une matrice de moulage secondaire.
